# FASCICULE DE BREVET EUROPEEN

(11) **EP 1 769 968 B1**
(45) Date de publication et mention de la délivrance du brevet: **15.09.2010**
(21) Numéro de dépôt: 06291500.4
(22) Date de dépôt: 22.09.2006
(51) Int. Cl.: B60Q 1/08, F21V 14/08

(54) **Système d'adaption de l'éclairage d'un véhicule en fonction d'une situation de route et procédé mis en oeuvre par ce système**
Adaptive front lighting system for a vehicle depending on the road situation and method implemented by this system
Kfz-Beleuchtungsystem zur Anpassung der Beleuchtung an eine Strassensituation und von diesem System durchgeführtes Verfahren

(30) Priorité: 30.09.2005 FR 0510033
(43) Date de publication de la demande: 04.04.2007
(73) Titulaire: VALEO VISION, 93012 Bobigny Cedex (FR)
(72) Inventeur: Wiegand, Boris, c/o Valeo Gmbh, 70567 Stuttgart (DE)
(74) Mandataire: Tran, Chi-Hai

(56) Documents cités:
- EP-A- 1 466 782
- EP-A- 1 528 313
- DE-A1- 10 305 624
- FR-A- 2 866 413
- US-A- 5 660 454
- US-A1- 2001 012 206
- US-A1- 2002 003 473
- US-A1- 2002 163 814
- US-A1- 2003 107 323
- US-B1- 6 293 686

## Description

### Domaine de l'invention

L'invention concerne un système pour adapter l'éclairage d'un véhicule en fonction d'une situation de route, telle que le déplacement du véhicule en ville, sur une autoroute, ou dans un pays avec un sens de conduite différent, etc. L'invention concerne également un procédé mis en oeuvre par ce système.

L'invention trouve des applications dans le domaine de l'éclairage des véhicules et, en particulier, dans le domaine de l'adaptation de l'éclairage en fonction des situations de route.

### Etat de la technique

Dans le domaine de l'éclairage automobile, il existe différents types de dispositifs d'éclairages parmi lesquels on trouve essentiellement les feux de position, d'intensité et de portée faibles, les feux de croisement, d'intensité plus forte et de portée sur la route avoisinant 70 mètres et les feux de route, de longue portée (avoisinant les 200 mètres). Classiquement, les feux de croisement sont utilisés la nuit, en ville ou sur la route lorsque le véhicule croise un autre véhicule. Les feux de route sont utilisés sur une route ou une autoroute lorsqu'il n'y a pas d'autres véhicules susceptibles d'être éblouis.

Classiquement ces différents feux étaient obtenus au moyen de plusieurs sources lumineuses intégrées dans un même projecteur.

Plus récemment, un projecteur, dit bimode, est apparu qui permet de cumuler les fonctions de feu de croisement et de feu de route. Un tel projecteur bimode est équipé d'une seule source lumineuse et d'un cache. Ce cache est généralement une plaque métallique, amovible, apte à passer d'une première position dans laquelle elle n'occulte pas le faisceau lumineux produit par la source lumineuse à une seconde position dans laquelle elle occulte partiellement ce faisceau lumineux. Lorsque le cache occulte partiellement le faisceau lumineux, le projecteur est en fonction «feu de croisement » ; lorsque le cache est dans sa première position, le projecteur est en fonction «feu de route ».

Avec un éclairage de type feu de route / feu de croisement classique, lorsqu'un véhicule aborde un virage, les projecteurs du véhicule éclairent droit devant eux. Ils ne suivent pas la trajectoire du véhicule, dans le virage. Pour améliorer la visibilité du conducteur dans les virages, il existe une fonction DBL (Dynamic Bending Light) qui permet de suivre la trajectoire du véhicule, notamment dans les virages. Cette fonction DBL permet de modifier l'orientation d'un faisceau lumineux produit par la source lumineuse de chaque projecteur de telle sorte que la route est éclairée de façon optimale lorsqu'un véhicule aborde un virage. Par exemple, lorsque le véhicule aborde un virage à droite, l'éclairage est dévié vers la droite de la route. Lorsqu'un véhicule aborde un virage à gauche, l'éclairage du véhicule est dévié vers la gauche de la route. Cette fonction DBL est obtenue en déplaçant le cache latéralement, devant le faisceau lumineux de chaque projecteur, vers la droite pour un éclairage à gauche ou vers la gauche pour un éclairage à droite

Il existe par ailleurs des fonctionnalités qui permettent d'améliorer l'éclairage de la route, en fonction de situations particulières. Il existe notamment une fonction de compensation de l'éclairage qui modifie l'éclairage verticalement en fonction de l'assiette du véhicule. Autrement dit, lorsque le véhicule n'est pas parallèle à la route, le faisceau lumineux peut être orienté pour augmenter ou réduire sa portée lumineuse. Cette fonction de compensation est obtenue en déplaçant le cache verticalement dans chaque projecteur. En particulier, lorsque le véhicule «pique du nez », c'est-à-dire que l'avant du véhicule est dirigé vers la route, par exemple en cas de freinage, alors l'éclairage du véhicule est dévié vers le haut pour augmenter la portée lumineuse. Au contraire, lorsque le véhicule «lève le nez », c'est-à-dire que l'arrière du véhicule est dirigé vers la route, par exemple en cas de charge trop importante à l'arrière du véhicule, alors l'éclairage du véhicule est dévié vers le bas pour diminuer la portée lumineuse.

Il existe d'autres fonctions d'amélioration de l'éclairage d'un véhicule, appelées fonctions AFS (Adaptative Front Lighting System), qui dépendent de la situation de route, c'est-à-dire de la situation dans laquelle se trouve le véhicule à un instant donné. Cette situation peut dépendre de l'emplacement où se trouve le véhicule, de conditions climatiques, du code de la route adopté par le pays dans lequel se trouve le véhicule, etc.

L'une de ces fonctions, appelée townlight, concerne l'éclairage en ville. Cette fonction assure un élargissement du faisceau lumineux et une diminution légère de la portée de chaque feu de croisement, pour étaler le faisceau lumineux produit à l'avant du véhicule, afin de favoriser l'éclairage des voies de circulation latérales et des trottoirs.

Une fonction, dite motorway light, concerne l'éclairage sur autoroute. Cette fonction assure une augmentation de la portée lumineuse des feux de croisement lorsque le véhicule est sur une autoroute.

Une fonction, appelée overhead light concerne l'éclairage de portiques situés en hauteur sur l'autoroute. Cette fonction assure une orientation vers le haut des feux de croisement afin d'augmenter le flux lumineux vers les panneaux de signalisation d'autoroute sous lesquels passe le véhicule.

Une fonction, dite adverse weather light, concerne l'éclairage par mauvais temps. Cette fonction assure un étalement du faisceau lumineux de chaque feu de croisement et une diminution légère du flux lumineux envoyé par le bas, afin que le conducteur du véhicule ou ceux des véhicules venant en sens inverse ne soient pas éblouis par le reflet des projecteurs sur route mouillée.

Ces différentes fonctions sont obtenues séparément au moyen de sources lumineuses supplémentaires et/ou en modifiant la position du cache dans le projecteur. Chaque fonction correspond donc à une position particulière des caches, dans les projecteurs. On comprend alors que la mise en oeuvre de plusieurs de ces fonctions est complexe. En outre, la mise en oeuvre de certaines de ces fonctions nécessite l'ajout de sources lumineuses supplémentaires, ce qui augmente le coût d'un projecteur.

Le document EP 1 466 782 propose de mettre en oeuvre certaines de ces fonctions en superposant les faisceaux lumineux différents produits par chaque projecteur, le nombre de faisceaux lumineux différents disponible dans chaque projecteur étant peu important.

Le document EP-A2-1 398 210 décrit une fonctionnalité particulière, appelée fonctionnalité de vacanciers, qui consiste à modifier l'orientation de l'éclairage lorsque le véhicule roule sur un territoire avec conduite à droite ou, au contraire, conduite à gauche. En particulier, lorsqu'un véhicule arrive en Grande-Bretagne, ou dans un autre pays à conduite à gauche, alors l'éclairage est modifié de façon à éclairer plus largement le coté gauche de la route, c'est-à-dire les routes latérales et le trottoir, et à baisser l'éclairage sur le coté droit pour ne pas éblouir les conducteurs des véhicules croisés. Ce document décrit donc un dispositif permettant de modifier les faisceaux lumineux des projecteurs d'un véhicule pour adapter l'éclairage au sens de conduite du pays. Ce dispositif comporte deux projecteurs bimodes équipés de la fonction DBL et de la fonction de compensation (levelling, en termes anglo-saxons). Ces fonctions de compensation et DBL sont utilisées pour créer un cache vacancier, c'est-à-dire un cache adapté au sens de conduite du pays. Ce cache vacancier correspond à un abaissement du faisceau lumineux du projecteur droit afin de ne pas éblouir les conducteurs de véhicules venant en sens inverse et à une rotation du projecteur gauche pour permettre un meilleur éclairage vers le bas coté gauche.

Un tel dispositif présente l'inconvénient d'adapter l'éclairage du véhicule à une unique situation de route correspondant à un changement de sens de conduite.

### Exposé de l'invention

L'invention a justement pour but de remédier aux inconvénients des techniques exposées précédemment. A cette fin, l'invention propose de combiner la fonction DBL et la fonction de compensation pour permettre de réaliser différentes fonctions d'amélioration de l'éclairage d'un véhicule, avec une source lumineuse dans chaque projecteur. Pour cela, l'invention propose un système d'adaptation de l'éclairage d'un véhicule dans lequel les projecteurs sont équipés chacun d'une fonction DBL et d'une fonction de compensation et dans lequel le cache de chaque projecteur est indépendant de l'autre, et comporte une surface de coupure comportant trois zones planes séparées par deux zones en cuvette. Ainsi, dans le système de l'invention, les deux faisceaux lumineux sont émis indépendamment l'un de l'autre, ce qui permet d'obtenir un faisceau global avec une coupure de forme variable, adaptée à la situation de route rencontrée.

Avantageusement, le projecteur est un projecteur multimode équipé d'un cache multifonctions.

De façon plus précise, l'invention concerne un système d'adaptation selon les caractéristiques techniques de la revendication 1.

L'invention peut comporter une ou plusieurs des caractéristiques suivantes :
- le projecteur est un projecteur multimode comportant un cache apte à former des coupures du faisceau lumineux de formes différentes.
- le projecteur est un projecteur multixénon.
- le système comporte une unité de commande des caches assurant une commande du déplacement horizontal et du déplacement vertical de chaque cache de projecteur en fonction de la situation de route.
   L'invention concerne également un procédé mis en oeuvre par ce système. Ce procédé consiste à
- détecter une situation de route,
- commander un déplacement vertical et un déplacement horizontal du cache du projecteur droit ainsi qu'un déplacement vertical et un déplacement horizontal du cache projecteur gauche en fonction de la situation de route détectée, pour produire un faisceau lumineux droit et un faisceau lumineux gauche indépendants l'un de l'autre.

Ce procédé peut comporter une ou plusieurs des caractéristiques suivantes :
- la situation de route détectée est la présence d'une ville, d'une autoroute et/ou un changement de sens de conduite.
- le faisceau lumineux est déplacé d'un angle d'environ 2 à 5 degrés sur la droite ou sur la gauche, en éclairage de ville.
- le faisceau lumineux est déplacé d'environ -1 à -3 pour-cent verticalement, en éclairage de ville.
- le faisceau lumineux est déplacé d'un angle d'environ 0.3 à 1 degré sur la droite ou sur la gauche, en éclairage d'autoroute.
- le faisceau lumineux est déplacé d'environ +0.3 à + 0.5 pour-cent verticalement, en éclairage d'autoroute.

### Brève description des dessins

La figure 1, représente un exemple de cache pour projecteur multimode selon l'invention.
La figure 2 représente schématiquement le système de l'invention.
La figure 3 représente un exemple de faisceau lumineux global pour éclairage de ville obtenu avec les projecteurs du système de l'invention.
Les figures 4, 5 et 6 représentent différents exemples de faisceaux lumineux globaux obtenus en modifiant les positions horizontales et verticales des caches dans un système selon l'invention.
La figure 7 représente un exemple de faisceau lumineux global pour éclairage d'autoroute obtenu avec les projecteurs du système de l'invention.

### Description détaillée de modes de réalisation de l'invention

Le système de l'invention propose de réaliser certaines au moins des fonctionnalités d'un système d'éclairage progressif AFS. Ces fonctionnalités sont obtenues, selon l'invention, en combinant les avantages de la fonction DBL avec ceux de la fonction de compensation et en utilisant ces avantages combinés sur des projecteurs équipés de caches, indépendants l'un de l'autre.

Plus précisément, dans le système de l'invention, le projecteur droit et projecteur gauche comportent chacun un cache. Ce cache est appelé cache de trafic à droite, pour le projecteur droit, et cache de trafic à gauche, pour le projecteur gauche. Le cache de trafic à droite permet de créer une coupure du faisceau lumineux droit. Le cache de trafic à gauche permet de créer une coupure du faisceau lumineux gauche. La position du cache de trafic à droite, dans le projecteur droit, est indépendante de la position du cache de trafic à gauche du projecteur gauche. Les coupures des faisceaux lumineux droit et gauche sont donc indépendantes l'une de l'autre. De ce fait, le faisceau lumineux droit est indépendant du faisceau lumineux gauche.

Du fait de cette indépendance des caches et en combinant la fonction DBL, qui permet de modifier l'orientation du faisceau lumineux horizontalement (vers la droite ou vers la gauche), avec la fonction de compensation, qui permet de modifier l'orientation du faisceau lumineux verticalement (vers le haut ou vers le bas), on obtient toute une gamme d'éclairages. Les éclairages obtenus à partir des deux faisceaux lumineux indépendants droit et gauche, varie entre un éclairage maximum gauche et un éclairage maximum droit ainsi qu'un éclairage maximum haut et un éclairage maximum bas. On comprend ainsi que la combinaison des fonctions DBL et de compensation offre une grande liberté de mouvements des faisceaux lumineux, augmentée encore par le fait que les caches des deux projecteurs sont indépendants l'un de l'autre. La direction des faisceaux lumineux peut ainsi être commandée selon les 3 axes de l'espace.

De façon avantageuse, le système de l'invention est monté sur des projecteurs multimodes. De tels projecteurs ont l'avantage d'offrir plusieurs positions possibles pour chaque cache ainsi que des formes de cache différentes. Un projecteur multimode, par exemple un projecteur multixénon, permet donc de cumuler plusieurs fonctions d'éclairage.

Un projecteur multimode comporte une source lumineuse et un cache amovible pouvant prendre plus de deux positions. Ce cache, appelé cache multifonctions, est généralement une plaque métallique avec une surface de coupure non plane. Ainsi, en fonction de la position du cache par rapport à la source lumineuse, le faisceau lumineux sortant du projecteur est plus ou moins occulté. De ce fait, il éclaire plus ou moins profondément la route située à l'avant du véhicule.

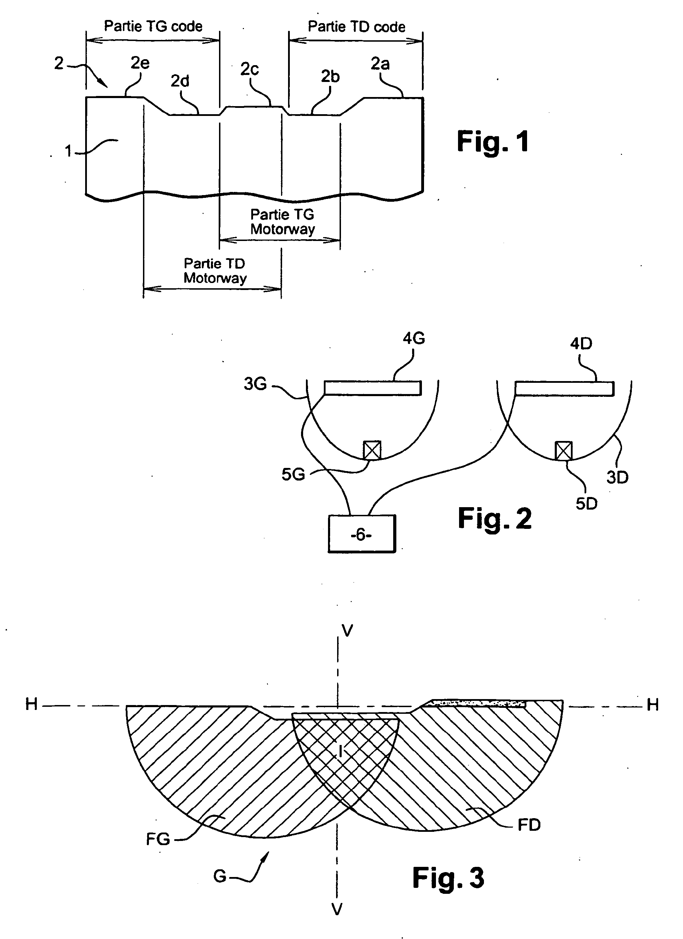

Un exemple de cache de projecteur multimode selon l'invention est représenté sur la figure 1. Ce cache 1 comporte une face non plane formant la surface de coupure 2. Cette surface de coupure 2 est la surface qui, dans certaines positions du cache, assure une coupure du faisceau lumineux de sorte qu'une partie du faisceau lumineux seulement éclaire la route. Dans un projecteur multimode, la surface de coupure 2 a une forme complexe. Dans l'exemple de la figure 1 selon l'invention, cette surface de coupure 2 comporte trois zones planes 2a, 2c, 2e, séparées par deux zones en cuvettes 2b et 2d.

La zone plane 2a et la zone en cuvette 2b forment une partie TD code. Cette partie TD code est la partie de la surface de coupure 2 utilisée pour couper le faisceau lumineux pour réaliser l'éclairage en code à droite du véhicule.

La zone plane 2e et la zone en cuvette 2d forment une partie TG code. Cette partie TG code est la partie de la surface de coupure 2 utilisée pour couper le faisceau lumineux pour réaliser l'éclairage en code à gauche du véhicule.

La zone plane 2c et la zone en cuvette 2b forment une partie TG motorway. Cette partie TG motorway est la partie de la surface de coupure 2 utilisée pour couper le faisceau lumineux pour réaliser l'éclairage en mode autoroute à droite du véhicule.

La zone plane 2c et la zone en cuvette 2d forment une partie TD motorway. Cette partie TD motorway est la partie de la surface de coupure 2 utilisée pour couper le faisceau lumineux pour réaliser l'éclairage en mode autoroute à gauche du véhicule.

Chacune de ces parties (TD motorway, TG code, ...) constitue une zone de coupure.

De cette façon, chaque faisceau lumineux droit et gauche peut être orienté de façon totalement indépendante de l'autre faisceau lumineux, suivant les trois axes de l'espace. La combinaison des deux faisceaux d'éclairage droit et gauche permet alors de moduler le faisceau global à l'avant du véhicule.

Sur la figure 2, on a représenté schématiquement le système de l'invention. Ce système comporte un projecteur droit 3D et un projecteur gauche 3G. Le projecteur droit 3D comprend une source lumineuse 5D et un cache 4D. Le projecteur gauche 3G comprend une source lumineuse 5G et un cache 4G. Comme on le verra plus en détail ultérieurement, les caches 4D et 4G sont commandés par une unité de commande 6.

Sur la figure 3, on a représenté un exemple de faisceau lumineux global produit avec le système d'adaptation de l'invention pour un éclairage de ville. Dans cet exemple, on a représente le faisceau droit FD produit par le projecteur droit et le faisceau gauche FG produit par le projecteur gauche par rapport à une ligne horizontale H et une ligne verticale V. Les faisceaux FD et FG forment le faisceau global G. Les faisceaux FD et FG ont une zone d'intersection I.

Les lignes H et V sont centrées dans la zone I du faisceau global G lorsque le faisceau global G est dirigé droit devant le véhicule, sans aucune orientation latérale ou verticale. Dans l'exemple de la figure 3, les lignes H et V ne sont pas centrées dans la zone I. La déviation de la ligne horizontale H provient du fait que, dans l'exemple de la figure 3, le faisceau gauche FG est compensé de - 3% et le faisceau droit est compensé de - 1 %. La déviation de la ligne verticale V provient du fait que, dans l'exemple de la figure 3, le faisceau gauche FG est déplacé 5° vers la gauche et le faisceau droit est déplacé de 2° vers la droite. Les déviations vers la droite et la gauche sont obtenues en déplaçant le cache latéralement, comme le permet la fonction DBL. Les compensations vers le haut et vers le bas sont obtenues en déplaçant le cache verticalement comme le permet la fonction de compensation.

Dans cet exemple, on comprend que le faisceau gauche a été baissé de 3% et dévié de 5° vers la gauche et le faisceau droit a été baissé de 1 % et dévié de 1° vers la droite pour améliorer la visibilité en ville. Un tel éclairage correspond aux caractéristiques de la fonction « townlight », décrite précédemment.

Sur les figures 3, 4 et 5, on a représenté trois exemples de faisceaux lumineux globaux pouvant être obtenus avec un système d'éclairage selon l'invention, pour différentes valeurs de compensations verticales et de déplacements horizontaux des caches.

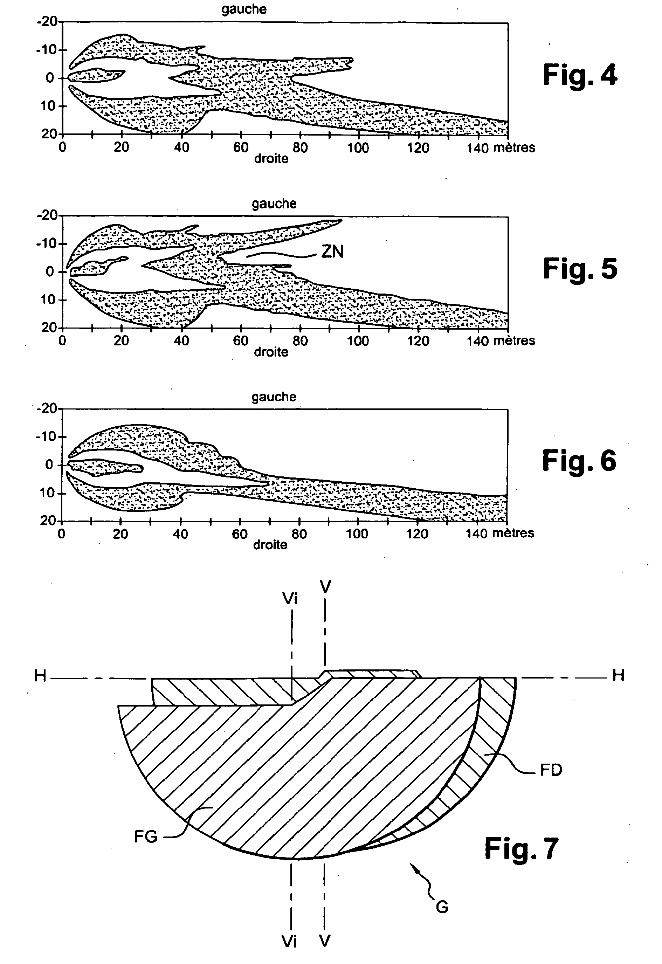

Plus précisément, dans l'exemple de la figure 4, le faisceau gauche est déplacé de 5° vers la gauche et baissé de 1%. Le projecteur droit est déplacé de 5° sur la droite et baissé de 0,3%.

Dans l'exemple de la figure 5, le projecteur gauche est déplacé de 7° sur la gauche et baissé de 1 %. Le projecteur droit est déplacé de 5° à droite et baissé de 0,3%.

Dans l'exemple de la figure 6, le projecteur gauche est déplacé de 2° à gauche et baissé de 1%. Le projecteur droit est déplacé de 3° à droite et baissé de 0,3%.

Comme on le voit sur ces trois figures, le faisceau global éclairant la route diffère nettement en fonction des valeurs de déplacement et des valeurs de compensation. Ces trois exemples sont donnés pour un même cache de projecteur multimode.

L'exemple de la figure 4 a l'avantage d'éclairer sensiblement vers la gauche du véhicule, tout en favorisant un éclairage avec une portée relativement longue à l'avant du véhicule, pour un éclairage avec des codes. Un tel éclairage offre une illumination maximum de 228.09 Lux.

L'exemple de la figure 5 a l'avantage de permettre un bon éclairage vers la gauche, c'est-à-dire vers d'éventuelles routes latérales sur la gauche. Par contre, elle présente l'inconvénient de présenter une zone noire ZN à l'avant du véhicule. Cette zone noire ZN, bien que peu gênante en présence d'éclairages de ville de type lampadaires, peut être très gênante à la sortie de la ville lorsqu'il n'y a pas d'éclairage de ville. Un tel éclairage offre une illumination maximum de 278.76 Lux.

L'exemple de la figure 6 montre un éclairage totalement dirigé vers la droite du véhicule. Cet éclairage a l'avantage de bien illuminer la route à l'avant du véhicule. Un tel éclairage offre une illumination maximum de 290.03 Lux.

Ces trois exemples correspondent à trois diagrammes d'éclairement différents pouvant être choisis pour une fonction d'éclairage en ville. Différents éclairages peuvent aussi être obtenus pour la fonction « motorway light », en fonction des valeurs choisies pour les déviations à gauche et à droite et les compensations vers le haut et vers le bas.

Sur la figure 7, on a représenté un exemple de faisceau lumineux global produit avec le système d'adaptation de l'invention pour un éclairage d'autoroute. Dans cet exemple, on a représente le faisceau droit FD produit par le projecteur droit et le faisceau gauche FG produit par le projecteur gauche par rapport à une ligne horizontale H et une ligne verticale V. Les faisceaux FD et FG forment le faisceau global G.

Les lignes H et V sont centrées dans le faisceau global G lorsque ledit faisceau global G est en éclairage d'autoroute. Pour un faisceau « normal », c'est-à-dire dont les deux projecteurs seraient dirigés droit devant le véhicule, au même endroit, alors la ligne verticale serait la ligne Vi.

Dans l'exemple de la figure 7, le projecteur gauche formant le faisceau FG a une coupure de type motorway avec une compensation vers le haut de +0,3%. Le projecteur droit formant le faisceau droit FD a une coupure code normale avec une compensation de - 0,5 % et une déviation de 0,25° à gauche.

Dans cet exemple, on comprend que le faisceau gauche a été levé de 0,3% par rapport à la coupure autoroute normale et le faisceau droit a été baissé de 0,5 % et dévié de 0,25° vers la gauche par rapport à la coupure code normale. Un tel éclairage permet d'améliorer la visibilité dans l'axe du véhicule et de diminuer la lumière à droite du véhicule pour limiter la réflexion dans le rétroviseur d'un véhicule roulant devant, sur la voie de droite de l'autoroute.

Les caractéristiques d'autres fonctionnalités du système d'éclairage progressif AFS peuvent être obtenues avec le système de l'invention, en utilisant notamment les différentes zones de coupure offertes par un cache de projecteur multimode. Ces fonctionnalités sont, par exemple, le changement de sens de conduite.

Dans le système de l'invention, les déplacements latéraux et verticaux des caches ainsi que la zone de coupure du cache, dans le cas d'un projecteur multimode, sont commandés à partir d'une unité de commande. Cette unité de commande reçoit, en entrée, toutes les informations disponibles sur la situation de route du véhicule. Ces informations sont traitées par un logiciel intégré dans l'unité de commande.

Ces informations de situation de route peuvent être, par exemple, la vitesse à laquelle roule le véhicule. Elles peuvent être également des informations obtenues des capteurs situés en extérieur du véhicule, qui permettent de capter le degré de l'éclairage en extérieur du véhicule, ou bien des informations provenant d'une caméra, par exemple infrarouge, située à l'avant du véhicule, ou encore des données obtenues par cartographie ou GPS, qui fournissent des informations sur le lieu où se trouve le véhicule, etc.

Ce système de l'invention peut être commandé soit manuellement, dans un mode manuel, par le conducteur du véhicule, soit automatiquement, en utilisant les informations reçues par l'unité de commande.

## Revendications

1. Système d'adaptation d'un éclairage de véhicule à une situation de route comportant deux projecteurs équipés
- d'une part, d'une fonction DBL assurant une modification horizontale de l'orientation des faisceaux lumineux émis par les projecteurs, et
- d'autre part, d'une fonction de compensation assurant une modification verticale de l'orientation desdits faisceaux lumineux, les projecteurs comprenant :
- un projecteur droit (3D) projetant sur la route un faisceau lumineux droit (FD) et équipé d'au moins un cache de trafic à droite (4D) apte à assurer une coupure du faisceau lumineux droit, et
- un projecteur gauche (3G) projetant sur la route un faisceau lumineux gauche (FG) et équipé d'au moins un cache de trafic à gauche (4G) apte à assurer une coupure du faisceau lumineux gauche,
les caches de trafic à droite et trafic à gauche étant aptes à prendre des positions indépendantes l'une de l'autre, assurant des coupures de faisceaux indépendantes pour le faisceau droit et pour le faisceau gauche, **caractérisé en ce que** lesdits caches comportent une surface de coupure (2) comportant trois zones planes (2a,2b,2c) séparées par deux zones en cuvette (2b,2c).

2. Système selon la revendication 1, **caractérisé en ce que** le projecteur est un projecteur multimode comportant un cache apte à former des coupures du faisceau lumineux de formes différentes

3. Système selon la revendication 2, **caractérisé en ce que** le projecteur est un projecteur multixénon.

4. Système selon l'une quelconque des revendications 1 à 3, **caractérisé en ce qu'**il comporte une unité de commande (6) des caches assurant une commande du déplacement horizontal et du déplacement vertical de chaque cache de projecteur en fonction de la situation de route.

5. Procédé d'adaptation d'un éclairage de véhicule à une situation, mis en oeuvre par le système selon l'une quelconque des revendications précédentes, **caractérisé en ce qu'**il consiste à
- détecter une situation de route,
- commander un déplacement vertical et un déplacement horizontal du cache (4D) du projecteur droit (3D) ainsi qu'un déplacement vertical et un déplacement horizontal du cache (4G) projecteur gauche (3G) en fonction de la situation de route détectée, pour produire un faisceau lumineux droit (FD) et un faisceau lumineux gauche (FG) indépendants l'un de l'autre.

6. Procédé selon la revendication 5, **caractérisé en ce que** la situation de route détectée est la présence d'une ville, d'une autoroute et/ou un changement de sens de conduite.

7. Procédé selon la revendication 6, **caractérisé en ce que** le faisceau lumineux est déplacé d'un angle d'environ 2 à 5 degrés sur la droite ou sur la gauche, en éclairage de ville.

8. Procédé selon l'une quelconque des revendications 6 et 7, **caractérisé en ce que** le faisceau lumineux est déplacé d'environ -1 à -3 pour-cent verticalement, en éclairage de ville.

9. Procédé selon l'une quelconque des revendications 6 à 8, **caractérisé en ce que** le faisceau lumineux est déplacé d'un angle d'environ 0.3 à 1 degré sur la droite ou sur la gauche, en éclairage d'autoroute.

10. Procédé selon l'une quelconque des revendications 6 à 8, **caractérisé en ce que** le faisceau lumineux est déplacé d'environ +0.3 à + 0.5 pour-cent verticalement, en éclairage d'autoroute.

## Claims

1. System for adaptation of vehicle lighting to a road situation comprising two headlights which are equipped:
- firstly with a DBL function which assures horizontal modification of the orientation of the light beams emitted by the headlights; and
- secondly with a levelling function which assures vertical modification of the orientation of the said light beams,
the headlights comprising:
- a right-hand headlight (3D) which projects a right-hand light beam (FD) onto the road, and is equipped with at least one right-hand traffic shield (4D) which can assure cut-off of the right-hand light beam; and
- a left-hand headlight (3G) which projects a left-hand light beam (FG) onto the road, and is equipped with at least one left-hand traffic shield (4G) which can assure cut-off of the left-hand light beam,
the right-hand and left-hand traffic shields being able to adopt positions which are independent from one another, thus assuring beam cut-offs which are independent for the right-hand beam and for the left-hand beam, **characterised in that** the said shields comprise a cut-off surface (2) comprising three flat areas (2a, 2b, 2c) which are separated by two cupped areas (2b, 2c).

2. System according to claim 1, **characterised in that** the headlight is a multi-mode headlight comprising a shield which can form cut-offs with different forms, of the light beam.

3. System according to claim 2, **characterised in that** the headlight is a multi-xenon headlight.

4. System according to any one of claims 1 to 3, **characterised in that** it comprises a shield control unit (6) which provides a command for horizontal displacement and vertical displacement of each headlight shield, according to the road situation.

5. Method for adaptation of vehicle lighting to a situation, implemented by means of the system according to any one of the preceding claims, **characterised in that** it consists of:
- detecting a road situation;
- commanding vertical displacement and horizontal displacement of the shield (4D) of the right-hand headlight (3D), as well as vertical displacement and horizontal displacement of the shield (4G) of the left-hand headlight (3G), according to the road situation detected, in order to produce a right-hand light beam (FD) and a left-hand light beam (FG) which are independent from one another.

6. Method according to claim 5, **characterised in that** the road situation detected is the presence of a town, a motorway and/or a change of driving direction.

7. Method according to claim 6, **characterised in that** the light beam is displaced by an angle of approximately 2 to 5 degrees to the right or to the left in town lighting.

8. Method according to either of claims 6 and 7, **characterised in that** the light beam is displaced by approximately -1 to -3 percent vertically in town lighting.

9. Method according to any one of claims 6 to 8, **characterised in that** the light beam is displaced by an angle of approximately 0.3 to 1 degree to the right or to the left in motorway lighting.

10. Method according to any one of claims 6 to 8, **characterised in that** the light beam is displaced by an angle of approximately +0.3 to +0.5 percent vertically in motorway lighting.

## Patentansprüche

1. System zum Anpassen einer Fahrzeugbeleuchtung an eine Straßensituation mit zwei Scheinwerfern, die ausgestattet sind mit
- einerseits einer aktiven Kurvenlichtfunktion, die eine horizontale Veränderung der Ausrichtung der von den Scheinwerfern ausgesandten Lichtbündel gewährleistet, und
- andererseits einer Kompensierungsfunktion, die eine vertikale Veränderung der Ausrichtung der Lichtbündel gewährleistet,
wobei die Scheinwerfer umfassen:
- einen rechten Scheinwerfer (3D), der auf die Fahrbahn ein rechtes Lichtbündel (FD) projiziert und mit wenigstens einer Blende (4D) für Rechtsverkehr versehen ist, die eine Hell-Dunkel-Grenze im rechten Lichtbündel zu erzeugen vermag, und
- einen linken Scheinwerfer (3G), der auf die Fahrbahn ein linkes Lichtbündel (FG) projiziert und mit wenigstens einer Blende (4G) für Linksverkehr versehen ist, die eine Hell-Dunkel-Grenze im linken Lichtbündel zu erzeugen vermag,
wobei die Blenden für Rechtsverkehr und für Linksverkehr voneinander unabhängige Stellungen einzunehmen vermögen, die unabhängige Hell-Dunkel-Grenzen für das rechte und das linke Lichtbündel gewährleisten,
**dadurch gekennzeichnet, dass** die Blenden eine Begrenzungsfläche (2) mit drei ebenen Bereichen (2a, 2b, 2c) aufweisen, die durch zwei konkav gewölbte Bereiche (2b, 2c) voneinander getrennt sind.

2. System nach Anspruch 1,
**dadurch gekennzeichnet, dass** der Scheinwerfer ein Multi-Mode-Scheinwerfer ist mit einer Blende, die im Lichtbündel Hell-Dunkel-Grenzen mit unterschiedlichen Formen zu bilden vermag.

3. System nach Anspruch 2,
**dadurch gekennzeichnet, dass** der Scheinwerfer ein Multi-Xenon-Scheinwerfer ist.

4. System nach einem der Ansprüche 1 bis 3,
**dadurch gekennzeichnet, dass** es eine Einheit (6) zum Steuern der Blenden umfasst, die eine Steuerung der horizontalen Verlagerung und der vertikalen Verlagerung jeder Scheinwerferblende in Abhängigkeit von der Straßensituation gewährleistet.

5. Verfahren zum Anpassen einer Fahrzeugbeleuchtung an eine Straßensituation, das von dem System nach einem der vorhergehenden Ansprüche durchgeführt wird, **dadurch gekennzeichnet, dass** es darin besteht,
- eine Straßensituation zu erfassen,
- eine vertikale Verlagerung und eine horizontale Verlagerung der Blende (4D) des rechten Scheinwerfers (3D) sowie eine vertikale Verlagerung und eine horizontale Verlagerung der Blende (4G) des linken Scheinwerfers (3G) in Abhängigkeit von der erfassten Straßensituation zu steuern, um ein rechtes Lichtbündel (FD) und ein linkes Lichtbündel (FG) zu erzeugen, die voneinander unabhängig sind.

6. Verfahren nach Anspruch 5,
**dadurch gekennzeichnet, dass** es sich bei der erfassten Straßensituation um eine Stadtumgebung, eine Autobahn und/oder eine Links-Rechtsverkehränderung handelt.

7. Verfahren nach Anspruch 6,
**dadurch gekennzeichnet, dass** das Lichtbündel als Stadtlicht in einem Winkel von ca. 2 bis 5 Grad nach rechts oder nach links verlagert wird.

8. Verfahren nach einem der Ansprüche 6 oder 7,
**dadurch gekennzeichnet, dass** das Lichtbündel als Stadtlicht vertikal um ca. -1 bis -3 Prozent verlagert wird.

9. Verfahren nach einem der Ansprüche 6 bis 8,
**dadurch gekennzeichnet, dass** das Lichtbündel als Autobahnlicht in einem Winkel von ca. 0,3 bis 1 Grad nach rechts oder nach links verlagert wird.

10. Verfahren nach einem der Ansprüche 6 bis 8,
**dadurch gekennzeichnet, dass** das Lichtbündel als Autobahnlicht vertikal um ca. +0,3 bis +0,5 Prozent verlagert wird
